# FASCICULE DE BREVET EUROPEEN

(11) **EP 3 713 772 B1**
(45) Date de publication et mention de la délivrance du brevet: **09.03.2022**
(21) Numéro de dépôt: 18826764.5
(22) Date de dépôt: 20.11.2018
(51) Int. Cl.: B60C 1/00, C08C 19/06, C08L 19/00, C08L 15/00

(54) **POLYMÈRE DIÉNIQUE MODIFIÉ PAR UN GROUPE ÉPOXYDE**
DURCH EINE EPOXIDGRUPPE MODIFIZIERTES DIENPOLYMER
DIENE POLYMER MODIFIED BY AN EPOXIDE GROUP

(30) Priorité: 21.11.2017 FR 1760958
(43) Date de publication de la demande: 30.09.2020
(73) Titulaire: Compagnie Générale des Etablissements Michelin, 63000 Clermont-Ferrand (FR)
(72) Inventeur: SALIT, Anne-Frédérique, 63040 Clermont-Ferrand Cedex 9 (FR); SCHNELL, Benoît, 63040 Clermont-Ferrand Cedex 9 (FR); GANDER, Sophie, 63040 Clermont-Ferrand Cedex 9 (FR); IVANOV, Sergey, 63040 Clermont-Ferrand Cedex 9 (FR); FLEURY, Etienne, 63040 Clermont-Ferrand Cedex 9 (FR)
(74) Mandataire: Gandon-Pain, Sylvie
(86) Numéro de dépôt international: PCT/FR2018/052911
(87) Numéro de publication internationale: WO 2019/102126

(56) Documents cités:
- WO-A1-2016/203156
- US-A1- 2012 046 418

## Description

Le domaine de la présente invention est celui des polymères diéniques modifiés en ce qu'ils portent au moins un groupe pendant fonctionnel, plus particulièrement des polymères diéniques modifiés par des groupes pendants époxyde.

Il est connu de la demande de brevet US 2012/0046418 A1 des polymères diéniques portant des groupes pendants glycidyle. Ces polymères fonctionnels, notamment élastomères peuvent être utilisés réticulés dans une composition de caoutchouc, la présence des groupes pendants glycidyl permettant de réticuler le polymère diénique en présence d'un agent de réticulation autre que le soufre. Il s'avère que les polymères ainsi modifiés confèrent à la composition de caoutchouc qui les contient des propriétés à la rupture dégradées.

Or une composition de caoutchouc réticulée doit présenter de bonnes propriétés à la rupture pour pouvoir être utilisée dans un article semi-fini pour pneumatique. En effet, le pneumatique au cours du roulage est soumis à de fortes contraintes et à de grandes déformations, sachant qu'il doit aussi présenter une résistance au roulement la plus faible possible.

La Demanderesse a découvert, de façon surprenante, que l'introduction de polymères diéniques, en particulier élastomères, portant au moins un groupe pendant époxyde substitué spécifiquement dans une composition de caoutchouc permet d'améliorer ses propriétés à la rupture sans être au détriment de ses propriétés d'hystérèse tout en améliorant sa mise en œuvre.

Un premier objet de l'invention est un polymère comportant au moins un groupe pendant époxyde de formule (I) 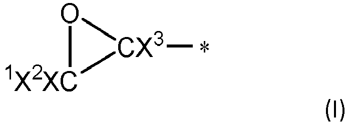 dans laquelle :
- ^{∗} représente un rattachement à la chaîne principale polymère,
- X¹ , et X² , identiques ou différents, représentent un atome d'hydrogène ou un substituant monovalent,
- X³ représente un atome d'hydrogène et
- au moins un des X¹ et X² est différent d'un atome d'hydrogène.

L'invention concerne également une composition de caoutchouc qui comprend une charge renforçante, un système de réticulation et un élastomère diénique conforme à l'invention.

Un autre objet de l'invention est un pneumatique qui comprend une composition de caoutchouc conforme à l'invention.

### I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont aussi concernés les polymères, les plastifiants, les charges....

Le polymère diénique conforme à l'invention a pour caractéristique essentielle de contenir à la fois des unités diéniques et au moins un groupe pendant époxyde particulier. Il est considéré comme un polymère diénique fonctionnalisé.

Par unité diénique, on entend une unité qui résulte de l'insertion d'un monomère diène (monomères porteurs de deux doubles liaisons carbone-carbone, conjuguées ou non) par polymérisation dans une chaîne polymère et qui contient une double liaison carbone-carbone.

Ces définitions étant données, on entend plus particulièrement par polymère diénique dans la présente invention :
(a) - tout homopolymère d'un monomère diène conjugué, notamment tout homopolymère obtenu par polymérisation d'un monomère diène conjugué ayant de 4 à 12 atomes de carbone ;
(b) - tout copolymère obtenu par copolymérisation d'un ou plusieurs diènes conjugués entre eux ou avec un ou plusieurs composés vinyle aromatique ayant de 8 à 20 atomes de carbone ;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
(d) - un copolymère d'isobutène et d'isoprène (caoutchouc butyle), ainsi que les versions halogénées, en particulier chlorées ou bromées, de ce type de copolymère ;
(e) - tout copolymère obtenu par copolymérisation d'un ou plusieurs diènes conjugués avec l'éthylène, une α-monooléfine aliphatique acyclique ayant 3 à 18 atomes de carbone ou leur mélange comme par exemple ceux décrits dans le document WO 2005028526, WO 2004035639 et WO 2007054224.

Le monomère diène est de préférence un 1,3-diène, notamment le 1,3-butadiène ou l'isoprène, auquel cas le polymère diénique a pour unité diénique des unités monomères 1,3-butadiène ou 1,3-isoprène, de préférence 1,3-butadiène.

De préférence le polymère diénique qui porte les groupes pendants est choisi dans le groupe constitué par les polybutadiènes, les polyisoprènes, les copolymères de butadiène, les copolymères d'isoprène et leurs mélanges. De manière plus préférentielle, le polymère diénique est un élastomère de synthèse (ou élastomère synthétique). En d'autres termes, le polymère diénique n'est pas un caoutchouc naturel. On rappelle que le caoutchouc naturel traditionnellement utilisé comme élastomère dans les compositions de caoutchouc provient de la matière sèche caoutchouteuse du latex de caoutchouc naturel, très souvent extraite de l'hévéa et n'est donc pas considéré comme un élastomère de synthèse. De manière très préférentielle, le polymère diénique est un élastomère.

Le groupe époxyde pendant porté par le polymère diénique conforme à l'invention le répond à la formule (I) 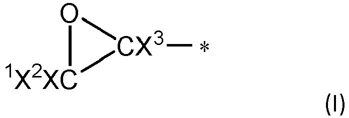 dans laquelle :
- ^{∗} représente un rattachement à la chaîne principale polymère (en anglais « main chain of the polymer »),
- X¹ , et X² , identiques ou différents, représentent un atome d'hydrogène ou un substituant monovalent,
- X³ représente un atome d'hydrogène et
- au moins un des X¹ et X² est différent d'un atome d'hydrogène.

De préférence, le groupe époxyde pendant est en dehors des extrémités de la chaîne principale polymère.

De préférence, le polymère diénique comporte plusieurs groupes pendants époxyde utile aux besoins de l'invention. La présence de plusieurs groupes époxydes pendants, notamment en dehors des extrémités de la chaîne principale polymère, permet de conférer de meilleures propriétés élastiques au polymère à l'état réticulé. Le taux de groupe pendant époxyde utile aux besoins dans le polymère peut varier dans une large mesure, selon l'application envisagée du polymère. Selon l'un quelconque des modes de réalisation de l'invention, le groupe époxyde pendant est préférentiellement présent à un taux allant de 0,01 à 5% molaire, plus préférentiellement de 0,01 à 1% molaire, encore plus préférentiellement de 0,1 à 1% molaire. Ce taux exprimé en pourcentage molaire, équivaut au nombre de groupes pendants époxyde utile à l'invention pour 100 motifs du polymère (moles de motifs monomères constituant le polymère, y compris ceux qui portent les groupes pendants).

Selon un mode de réalisation préférentiel, X¹ représente un groupe substituant et X² représente un atome d'hydrogène.

Selon un autre mode de réalisation préférentiel de l'invention, X¹ et X² représentent chacun un groupe substituant.

De préférence, le groupe substituant, représenté par les symboles X¹ ou X², est un groupe carboné, en particulier hydrocarboné. Le groupe substituant peut être aliphatique ou aromatique, linéaire, ramifié ou cyclique. Comme groupe substituant conviennent particulièrement les alkyles et les aryles, plus particulièrement les alkyles ayant 1 à 6 atomes de carbone, de préférence méthyle, ou les aryles ayant 6 à 12 atomes de carbone, de préférence phényle.

Selon un mode de réalisation particulier de l'invention, le groupe pendant époxyde est rattaché à la chaîne principale du polymère en étant greffé sur une unité diénique du polymère diénique. Autrement dit, le point de rattachement de chaque groupe pendant époxyde au polymère diénique se fait par une réaction de greffage sur une unité diénique.

Selon ce mode de réalisation particulier de l'invention, le groupe époxyde est greffé sur le polymère diénique par réaction d'un composé 1,3-dipolaire et d'un polymère diénique de départ.

De préférence, le composé 1,3-dipolaire est choisi dans le groupe constitué par les oxydes de nitrile, les imines de nitrile et les nitrones. Le composé 1,3-dipolaire est alors tel que le symbole Q contient un motif -C≡N→O, -C≡N→N- ou -C=N(→O)-. Avantageusement, le composé 1,3-dipolaire est un oxyde de nitrile.

Le composé 1,3-dipolaire comprend généralement un noyau benzénique substitué par le dipôle du composé 1,3-dipolaire et de préférence aussi substitué en ortho du dipôle. Très avantageusement, le composé 1,3 dipolaire est un oxyde de nitrile aromatique, c'est-à-dire un composé aromatique substitué par un dipôle oxyde de nitrile. Mieux, le composé 1,3-dipolaire est un monooxyde de nitrile aromatique, ce qui correspond à un composé qui contient un seul dipôle oxyde de nitrile et qui est un composé aromatique substitué par le dipôle oxyde de nitrile ( -C≡N→O).

De manière plus préférentielle, le composé 1,3-dipolaire contient un motif de formule (II) dans laquelle quatre des cinq symboles R1 à R5, identiques ou différents, sont chacun un atome ou un groupe d'atomes, et le cinquième symbole représente une chaîne carbonée permettant le rattachement au groupe époxyde, sachant qu'au moins un des R1 et R5 est différent d'un atome d'hydrogène.

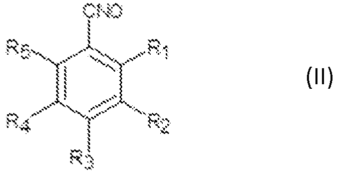

On entend par groupe d'atomes un enchaînement d'atomes liés de façon covalente pour former une chaîne. Deux groupes Ri et Ri+1, pour i nombre entier allant 1 à 4, peuvent former ensemble avec les atomes de carbone du noyau benzénique auxquels ils se rattachent, un cycle.

De préférence R1, R3 et R5 représentent chacun un groupe hydrocarboné et R2 ou R4 représente le cinquième symbole. De manière plus préférentielle R1, R3 et R5 représentent chacun un alkyle, de manière encore plus préférentielle un méthyle ou un éthyle.

La chaîne carbonée représentée par le cinquième symbole peut être aliphatique ou aromatique, linéaire, ramifiée ou cyclique, de préférence saturée. Le cinquième symbole représente préférentiellement une chaîne carbonée interrompue par un ou plusieurs hétéroatomes, de préférence oxygène. On entend par chaîne carbonée une chaîne qui comprend un ou plusieurs atomes de carbone. La chaîne carbonée peut être une chaîne hydrocarbonée. La chaîne carbonée peut comprendre une ou plusieurs fonctions éther, en particulier le cinquième symbole comprend un motif -CH₂O-, le groupe méthylène étant attaché au groupe époxyde.

Très avantageusement, le composé 1,3-dipolaire est un composé de formule (III), (IV) ou (V).

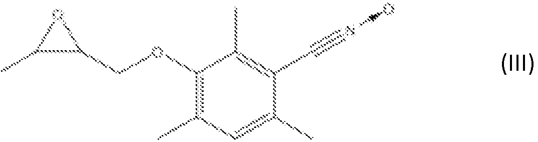

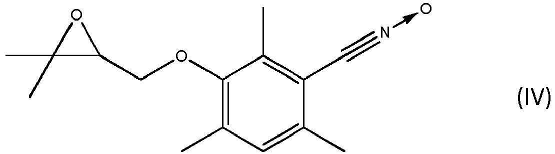

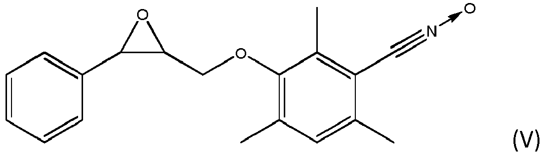

Le greffage procède d'une réaction de cycloaddition [2+3] du dipôle sur une double liaison carbone-carbone selon un mécanisme bien connu. Le greffage du composé 1,3-dipolaire peut être réalisé en masse, par exemple dans un mélangeur interne ou un mélangeur externe tel qu'un mélangeur à cylindres. Le greffage est alors mis en œuvre soit à une température du mélangeur externe ou du mélangeur interne inférieure à 60°C, suivi d'une étape de réaction de greffage sous presse ou en étuve à des températures allant de 80°C à 200°C, soit à une température du mélangeur externe ou du mélangeur interne supérieure à 60°C sans traitement thermique postérieur. Lorsque le greffage est réalisé en masse, il est réalisé préférentiellement en présence d'un antioxydant. Le greffage du composé 1,3-dipolaire sur le polymère peut être réalisé préalablement à l'introduction du polymère dans une composition de caoutchouc, ou au cours de la fabrication de la composition.

Le procédé de greffage peut également être effectué en solution en continu ou en discontinu. Le polymère diénique ainsi modifié peut être séparé de sa solution par tout type de moyen connu par l'homme de l'art et en particulier par une opération de stripping à la vapeur d'eau.

Le polymère diénique de départ est tout polymère diénique, en particulier élastomère, c'est-à-dire tout polymère constitué au moins en partie (i.e., un homopolymère ou un copolymère) d'unités monomères diènes. Dans l'objectif de synthétiser le polymère conforme à l'invention qui contient à la fois des unités diéniques et des groupes pendants époxydes, l'homme du métier comprend que la fraction molaire d'unité diénique dans le polymère diénique de départ est supérieure à la valeur visée de la fraction molaire de groupe pendant époxyde que l'on souhaite greffer sur le polymère diénique.

Le polymère diénique de départ, préférentiellement élastomère, peut être :
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyles aromatiques ayant de 8 à 20 atomes de carbone;
(c) - tout copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - tout copolymère d'isobutène et d'isoprène (caoutchouc butyle), ainsi que les versions halogénées, en particulier chlorées ou bromées, de ce type de copolymère ;
(e) - tout copolymère obtenu par copolymérisation d'un ou plusieurs diènes conjugués avec l'éthylène, une α-monooléfine ayant 3 à 18 atomes de carbone ou leur mélange comme par exemple ceux décrits dans le document WO 2005028526, WO 2004035639 et WO 2007054224.

Le monomère diène est de préférence un 1,3-diène, notamment le 1,3-butadiène ou l'isoprène, auquel cas le polymère diénique a pour unité diénique des unités monomères 1,3-butadiène ou 1,3-isoprène, de préférence 1,3-butadiène.

Préférentiellement, le polymère diénique de départ est choisi dans le groupe constitué par les polybutadiènes, les polyisoprènes, les copolymères de butadiène, les copolymères d'isoprène et leurs mélanges. Plus préférentiellement, le polymère diénique de départ est un polymère de synthèse (ou polymère synthétique). En d'autres termes, le polymère de départ n'est pas un caoutchouc naturel. Le polymère diénique de départ peut être un homopolymère de 1,3-butadiène, un homopolymère d'isoprène, un copolymère de 1,3-butadiène, un copolymère d'isoprène ou leurs mélanges. Le polymère diénique de départ est de manière plus préférentielle un élastomère diénique, notamment un homopolymère de 1,3-butadiène, un homopolymère d'isoprène, un copolymère de 1,3-butadiène, un copolymère d'isoprène ou leurs mélanges.

Le polymère conforme à l'invention, notamment lorsqu'il est élastomère, peut être utilisé dans une composition de caoutchouc, autre objet de l'invention.

La composition de caoutchouc comprend aussi un système de réticulation, notamment pour améliorer les propriétés d'élasticité de la composition de caoutchouc.

Selon une première variante de l'invention, le système de réticulation comprend un composé réactif vis-à-vis des unités diéniques du polymère diénique. Selon cette variante, le système de réticulation est à base de soufre, de peroxydes ou de peroxyde ou de bismaléimides. Lorsque le système de réticulation est un système de vulcanisation, il peut comprend des accélérateurs de vulcanisation, des retardateurs de vulcanisation ou des activateurs de vulcanisation.

Selon une deuxième variante de l'invention, le système de réticulation comprend un composé réactif vis-à-vis du groupe époxyde substitué. Selon cette variante, le composé réactif vis-à-vis du groupe époxyde substitué contient au moins deux fonctions nucléophiles choisies parmi la fonction acide, la fonction hydrazide et la fonction amine. Selon cette variante, des polyacides, notamment diacides comme décrits dans les demandes de brevet WO2014095582 et WO2014095585, conviennent tout particulièrement.

De préférence, le système de réticulation est à base de soufre, c'est-à-dire un système de vulcanisation.

La composition de caoutchouc comprend aussi une charge renforçante, notamment pour apporter les propriétés de renforcement à la composition de caoutchouc nécessaires à l'application dans laquelle il est envisagé d'utiliser la composition de caoutchouc.

La composition de caoutchouc comporte tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Selon un mode de réalisation particulier de l'invention, la charge renforçante comprend une charge inorganique renforçante, préférentiellement une silice. Selon ce mode de réalisation, la charge inorganique renforçante représente plus de 50% en masse de la masse de la charge renforçante de la composition de caoutchouc. On dit alors que la charge inorganique renforçante est majoritaire.

Lorsqu'il est combiné à une charge inorganique renforçante majoritaire telle que la silice, le noir de carbone est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

De manière préférentielle, le taux de charge renforçante totale est compris entre 30 et 160 pce, plus préférentiellement entre 40 pce et 160 pce. En deçà de 30 pce, le renforcement de la composition de caoutchouc est insuffisant pour apporter un niveau de cohésion ou de résistance à l'usure adéquats du composant caoutchouteux du pneumatique comprenant cette composition. De manière encore plus préférentielle, le taux de charge renforçante totale est d'au moins 50 pce. Au-delà de 160 pce, il existe un risque d'augmentation de l'hystérèse et donc de la résistance au roulement des pneumatiques. Pour cette raison, le taux de charge renforçante totale est de préférence dans un domaine allant de 50 à 120 pce, notamment pour un usage dans une bande de roulement de pneumatique. L'une quelconque de ces plages de taux de charge renforçante totale peut s'appliquer à l'un quelconque des modes de réalisation de l'invention.

Pour coupler la charge inorganique renforçante à l'élastomère diénique, on utilise de manière bien connue un agent de couplage, notamment un silane, (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Plus particulièrement, on utilise des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650). A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

La composition de caoutchouc conforme à l'invention peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru.

La composition de caoutchouc conforme à l'invention peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, des pigments, des agents de protection tels que cires anti-ozone, anti-ozonants chimiques, anti-oxydants, des agents anti-fatigue, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269.

La composition de caoutchouc conforme à l'invention est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Ainsi, la composition de caoutchouc conforme à l'invention peut être fabriquée par un procédé qui comprend les étapes suivantes :
- ajouter au cours d'une première étape dite non productive à l'élastomère diénique portant le groupe pendant époxyde la charge renforçante, le cas échéant les autres ingrédients de la composition de caoutchouc à l'exception du système de réticulation, en malaxant thermo-mécaniquement jusqu'à atteindre une température maximale comprise entre 130 et 200°C,
- refroidir l'ensemble à une température inférieure à 100°C,
- incorporer ensuite le système de réticulation,
- malaxer le tout jusqu'à une température maximale inférieure à 120°C.

Selon un mode de réalisation particulier de l'invention, la composition de caoutchouc conforme à l'invention peut être fabriquée par un procédé qui comprend les étapes suivantes :
- au cours d'une première étape dite non productive malaxer un élastomère diénique répondant à la définition de l'élastomère diénique de départ décrit précédemment, un composé 1,3-dipolaire tel que défini précédemment en malaxant thermo-mécaniquement,
- ajouter ensuite la charge renforçante, le cas échéant les autres ingrédients de la composition de caoutchouc à l'exception du système de réticulation en malaxant thermo-mécaniquement jusqu'à atteindre une température maximale comprise entre 130 et 200°C,
- refroidir l'ensemble à une température inférieure à 100°C,
- incorporer ensuite le système de réticulation,
- malaxer le tout jusqu'à une température maximale inférieure à 120°C.

Le temps de contact entre l'élastomère diénique et le composé 1,3-dipolaire qui sont malaxés thermo-mécaniquement est ajusté en fonction des conditions du malaxage thermomécanique, notamment en fonction de la température. Plus la température du malaxage est élevée, plus ce temps de contact est court. Typiquement il est de 1 à 5 minutes pour une température de 100 à 130°C.

Après l'incorporation de tous les ingrédients de la composition de caoutchouc, la composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé comme composant caoutchouteux pour la confection du pneumatique, notamment une bande de roulement pour pneumatique.

La composition de caoutchouc conforme à l'invention peut être soit à l'état cru (avant réticulation ou vulcanisation), soit à l'état cuit (après réticulation ou vulcanisation). Elle est préférentiellement utilisée dans un pneumatique, par exemple comme article semi-fini.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Mesures et tests utilisés :

### Analyse RMN :

L'analyse structurale ainsi que la détermination des puretés molaires des molécules de synthèses sont réalisées par une analyse RMN. Les spectres sont acquis sur un spectromètre Avance 3 400 MHz BRUKER équipé d'une sonde " large bande " BBFO-zgrad 5 mm. L'expérience RMN ¹H quantitative, utilise une séquence simple impulsion 30° et un délai de répétition de 3 secondes entre chacune des 64 acquisitions. Les échantillons sont solubilisés dans le Diméthylsulfoxide deutéré (DMSO). Ce solvant est également utilisé pour le signal de lock. La calibration est réalisée sur le signal des protons du DMSO deutéré à 2.44ppm par rapport à une référence TMS à 0ppm. Le spectre RMN ¹H couplé aux expériences 2D HSQC ¹H/13C et HMBC ¹H/¹³C permettent la détermination structurale des molécules (cf tableaux d'attributions). Les quantifications molaires sont réalisées à partir du spectre RMN 1D ¹H quantitatif.

La détermination du taux molaire de composé oxyde de nitrile greffé est réalisée par une analyse RMN. Les spectres sont acquis sur un spectromètre 500 MHz BRUKER équipé d'une « CryoSonde BBFO-zgrad-5 mm ». L'expérience RMN ¹H quantitative, utilise une séquence simple impulsion 30° et un délai de répétition de 5 secondes entre chaque acquisition. Les échantillons sont solubilisés dans le chloroforme deutéré (CDCl3) dans le but d'obtenir un signal de « lock ».

Des expériences RMN 2D ont permis de vérifier la nature du motif greffé grâce aux déplacements chimiques des atomes de carbone et de proton.

### Essais de traction :

Les allongements à la rupture et les contraintes à la rupture sont mesurés par des essais de traction selon la norme française NF T 46-002 de septembre 1988. Toutes ces mesures de traction sont effectuées dans les conditions normales de température (23 ± 30 2°C) et d'hygrométrie (50 ± 5% d'humidité relative), selon la norme française NF T 40-101 (décembre 1979).

### Propriétés dynamiques :

Les propriétés dynamiques tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 100% (cycle aller), puis de 100% à 0,1% (cycle retour). Les résultats exploités sont le module complexe de cisaillement dynamique (G^{∗}) à 25% de déformation, le facteur de perte tan(δ) et l'écart de module (ΔG^{∗}) entre les valeurs à 0,1 et 100% de déformation (effet Payne). Pour le cycle retour, on indique la valeur maximale de tan(δ) observée, noté tan(δ)max.

### Rhéometrie :

Les mesures sont effectuées à 150°C avec un rhéomètre à chambre oscillante, selon la norme DIN 53529 - partie 3 (juin 1983). Les mesures sont traitées selon la norme DIN 53529 - partie 2 (mars 1983). L'évolution du couple rhéométrique en fonction du temps décrit l'évolution de la rigidification de la composition par suite de la réaction de vulcanisation et permet ainsi de suivre l'avancement de la vulcanisation. On mesure pour chaque composition la valeur de couple minimum Cmin. Le Cmin est représentatif de la viscosité à cru (avant vulcanisation) de la composition de caoutchouc et permet d'appréhender l'aptitude de la composition de caoutchouc à être mise en œuvre (en anglais « processability »).

### II.2-Préparation des polymères modifiés :

Les polymères de départ sont les élastomères suivants :
- E1 : un copolymère de 1,3-butadiène et de styrène (SBR) contenant 26% d'unité styrène et 56% d'unité butadiène-1,2,
- E2 : un copolymère de 1,3-butadiène et de styrène (SBR) contenant 26% d'unité styrène et 24% d'unité butadiène-1,2,
- E3 : un polyisoprène de synthèse fort taux de cis « NIPOL2200 » de Nippon Zeon
- E4 : le caoutchouc naturel.

Les élastomères sont modifiés par greffage de composé 1,3-dipolaire selon le mode opératoire suivant :
On incorpore le composé 1,3-dipolaire à l'élastomère à l'aide d'un mélangeur interne (outil à cylindre) à 30°C, le taux de composé ajouté est de 0.5 mole pour 100 moles d'unités monomères diéniques de l'élastomère. Le mélange est homogénéisé en 15 passes portefeuille. Cette phase de mélangeage est suivie d'un traitement thermique à 120°C pendant 10 à 60 minutes sous presse à 10 bars de pression.

Les composés 1,3-dipolaires utilisés sont les composés D-1 à D-4 et ont été préparés conformément au paragraphe II.3.

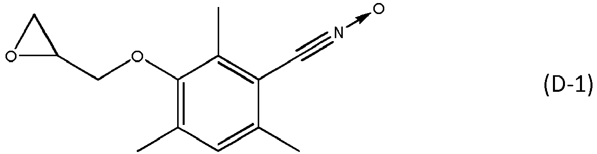

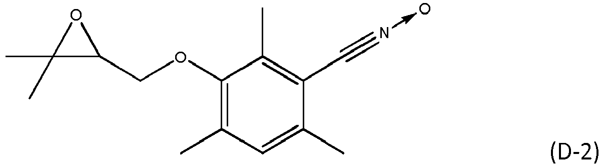

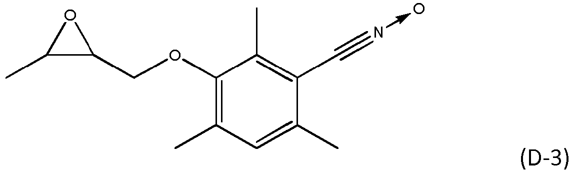

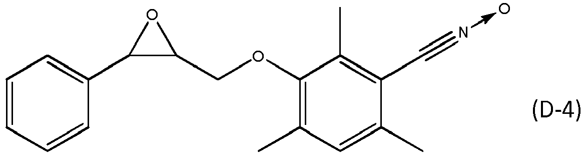

Le taux de groupe pendant époxyde dans le polymère est déterminé par analyse RMN pour chacun des élastomères modifiés et figure dans le tableau suivant :

| Taux de groupe époxyde pendant | D-1 | D-2 | D-3 |
|---|---|---|---|
| E1 | 0.37% | 0.50% | 0.50% |
| E2 | 0.50% | 0.50% | 0.45% |
| E3 | 0.19% | 0.50% | 0.25% |
| E4 | 0.15% | 0.24% | 0.20% |

### II.3-Synthèse des composés 1,3-dipolaires :

Les composés 1,3-dipolaires suivants ont été préparés, respectivement D-1, D-2, D-3 et D-4.

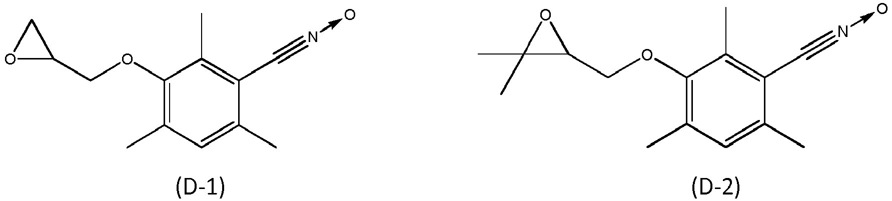

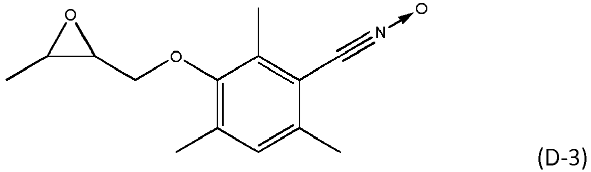

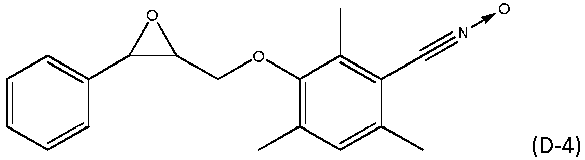

### Synthèse du 3-hydroxy-2,4,6-triméthylbenzaldéhyde (cible 1) :

Le composé cible 1 (ou A) est un précurseur commun utilisé dans la synthèse de certains des composés 1,3-dipolaires. Il est synthétisé selon le schéma suivant :

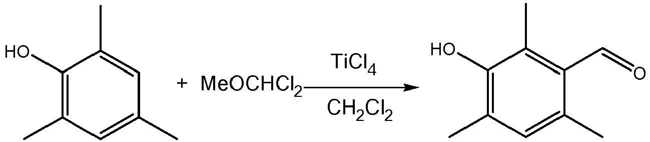

Le composé cible 1 peut être obtenu selon une procédure décrite dans l'article Yakubov, A. P.; Tsyganov, D. V.; Belen'kii, L. /.; Krayushkin, M. M. Bulletin of the Academy of Sciences of the USSR, Division of Chemical Science (English Translation); vol. 40; nb. 7.2; (1991); p. 1427 -1432*;* Izvestiya Akademii Nauk SSSR, Seriya Khimicheskaya; nb. 7; (1991); p. 1609 -1615*.*

### Synthèse du 2,4,6-triméthyl-3-(oxiran-2-ylméthoxy)benzonitrile oxyde (D-1) :

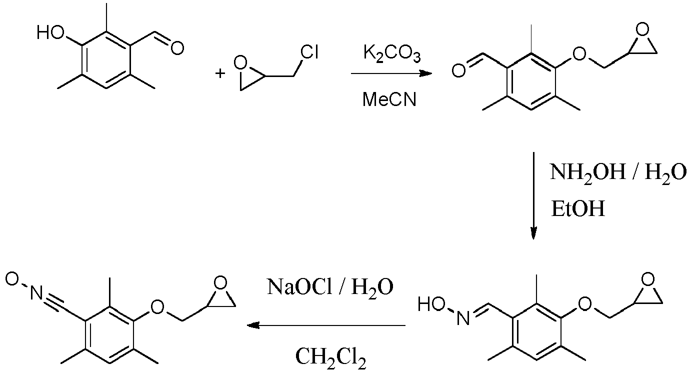

### Synthèse de 2,4,6-triméthyl-3-(oxiran-2-ylméthoxy)benzaldéhyde (cible 2) :

A un mélange de 3-hydroxy-2,4,6-triméthylbenzaldéhyde (40,00 g, 0,244 mol) et d'épichlorhydrine (56,35 g, 0,609 mol) dans l'acétonitrile (100 ml) est ajouté le carbonate de potassium (50,50 g, 0,365 mol). Le milieu réactionnel est agité pendant 3 heures à 60 ºC et ensuite agité pendant 2.5-3 heures à 70 ºC. Après retour à 40-50 °C, le mélange réactionnel est dilué avec un mélange d'eau (250ml) et d'éthylacétate (250 ml), puis maintenu sous agitation pendant 10 minutes. La phase organique est séparée et lavée avec de l'eau (4 fois par 125 ml). Le solvant est évaporé sous pression réduite (T_{bain} 37 ºC, 40 mbar). Une huile rouge (66,43 g) est obtenue.

Le produit secondaire de la réaction, le 3,3'-((2-hydroxypropane-1,3-diyl)bis(oxy))bis(2,4,6-triméthylbenzaldéhyde) est séparé du produit cible 2 par chromatographie sur colonne de silice (éluent : éthylacétate / éther de pétrole = 1 / 4). Après récupération des fractions du produit cible 2, les solvants sont évaporés sous pression réduite (Tbain 36 ºC, 21 mbar). De l'éther de pétrole (120 ml) est ajouté au résidu et la suspension est maintenue sous agitation à -18ºC pendant 2 heures. Le précipité est filtré et lavé sur le filtre avec de l'éther de pétrole (40/60) (3 fois 25 ml) et enfin séché pendant 10-15 heures sous pression atmosphérique à température ambiante. Un solide blanc (40,04 g, rendement massique de 75 %) avec un point de fusion de 52 °C est obtenu. La pureté molaire est supérieure à 99 % (RMN ¹H).

### Tableau d'attribution:

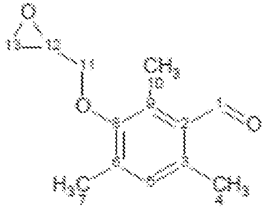

**Solvant DMSO**

| | δ ¹H (ppm) | δ ¹³C (ppm) |
|---|---|---|
| 1 | 10.37 | 193.3 |
| 2 | / | 131.1 |
| 3 | / | 132.8 |
| 4 | 2.4 | 19.2 |
| 5 | 6.94 | 131.3 |
| 6 | / | 136.3 |
| 7 | 2.2 | 16.1 |
| 8 | / | 153.4 |
| 9 | / | 135.7 |
| 10 | 2.4 | 11.7 |
| 11 | 3.50/4.00 | 73.4 |
| 12 | 3.29 | 49.6 |
| 13 | 2.60/2.76 | 42.9 |

### Synthèse de 2,4,6-triméthyl-3-(oxiran-2-ylmethoxy)benzaldéhyde oxime (cible 3) :

A une solution de 2,4,6-triméthyl-3-(oxiran-2-ylméthoxy)benzaldéhyde (46,70 g, 0,212 mol) dans l'alcool éthylique (750 ml) est ajoutée à température ambiante une solution d'hydroxylamine (16,81 g, 0,254 mol, 50 % dans l'eau, Aldrich) dans l'alcool éthylique (75 ml). Le milieu réactionnel est agité pendant 3 heures à 23°C (T_{bain}). Après évaporation du solvant (T_{bain} 24°C, 35 mbar), de l'éther de pétrole (40/60) (150 ml) est ajouté. Le précipité est filtré et lavé sur le filtre par l'éther de pétrole (100 ml). Le produit brut est solubilisé dans un mélange d'acétate d'éthyle (650 ml) et d'éther de pétrole (650 ml) à température ambiante et cette solution est filtrée sur une couche de silicagel (Ø9 cm, 2,0 cm de SiO₂). Les solvants sont évaporés (T_{bain} 22-24°C) et le produit cible 3 est séché sous pression atmosphérique à température ambiante. Un solide blanc (43,81 g, rendement massique de 88 %) avec un point de fusion de 77 °C est obtenu. La pureté molaire est supérieure à 99 % (RMN ¹H).

### Tableau d'attribution:

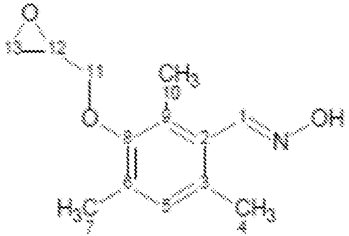

**Solvant DMSO**

| | δ ¹H (ppm) | δ ¹³C (ppm) |
|---|---|---|
| 1 | 8.2 | 147.3 |
| 2 | / | 129.1 |
| 3 | / | 129.2 |
| 4 | 2.18 | 20.1 |
| 5 | 6.85 | 130.2 |
| 6 | / | 130.3 |
| 7 | 2.15 | 15.7 |
| 8 | / | 153.1 |
| 9 | / | 131.7 |
| 10 | 2.18 | 13.1 |
| 11 | 3.48/3.96 | 73.3 |
| 12 | 3.27 | 49.6 |
| 13 | 2.60/2.76 | 42.8 |

### Synthèse de 2,4,6-triméthyl-3-(oxiran-2-ylméthoxy)benzonitrile oxyde (D-1) :

A une solution de 2,4,6-triméthyl-3-(oxiran-2-ylméthoxy)benzaldéhyde oxime (17,00 g, 0,072 mol) dans du dichlorométhane (350 ml) refroidie jusqu'à 3°C est ajoutée au goutte à goutte une solution aqueuse de NaOCl dans l'eau (62,9 g Cl actif/L) (126 ml) pendant 10-15 minutes. La température du milieu réactionnel reste comprise entre 3 et 5°C. Le milieu réactionnel est ensuite agité pendant 1 heure à température 3-5°C. La phase aqueuse est séparée et extraite avec du dichlorométhane (25 ml). Les phases organiques réunies sont lavées avec de l'eau (3 fois 75 ml). Le solvant est évaporé à pression réduite (T_{bain} 22°C, 35 mbar). A ce résidu est additionné de l'éther de pétrole (40/60) (90 ml) et la suspension est maintenue sous agitation à température ambiante pendant 10-12 heures. Le précipité est filtré et lavé sur le filtre avec de l'éther de pétrole (3 fois par 30 ml) et enfin séché pendant 10-15 heures sous pression atmosphérique à température ambiante. Un solide blanc (15,12 g, rendement massique de 90 %) avec un point de fusion de 63°C est obtenu. La pureté molaire est supérieure à 99 % (RMN ¹H).

### Tableau d'attribution:

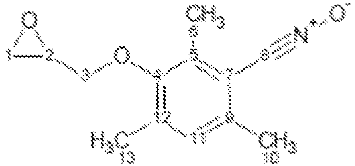

**Solvant DMSO**

| | δ ¹H (ppm) | δ ¹³C (ppm) |
|---|---|---|
| 1 | 2.59/2.76 | 43.0 |
| 2 | 3.28 | 49.6 |
| 3 | 3.51/4.03 | 73.5 |
| 4 | / | 153.0 |
| 5 | / | 136.3 |
| 6 | 2.27 | 14.3 |
| 7 | / | 111.7 |
| 8 | / | / |
| 9 | / | 134.4 |
| 10 | 2.18 | 15.9 |
| 11 | 7.01 | 129.9 |
| 12 | / | 134.0 |
| 13 | 2.27 | 19.5 |

### Synthèse de 2,4,6-triméthyl-3-(3-(3,3-diméthyloxiran-2-yl)propoxy)benzonitrile oxyde (D-2) :

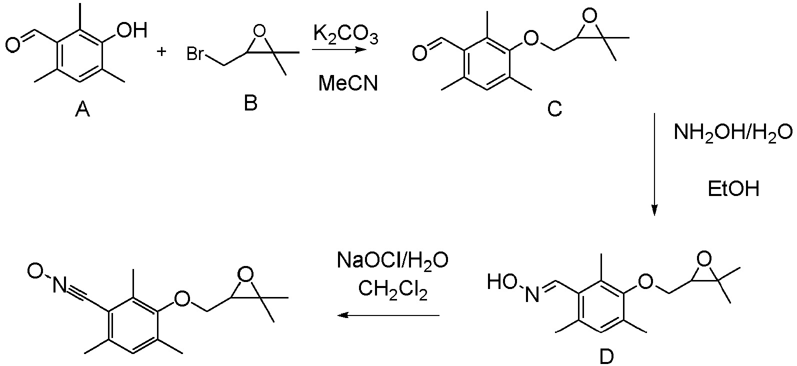

### Synthèse de 3-(bromométhyl)-2,2-diméthyloxirane (B) :

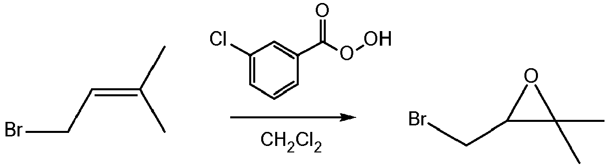

Le composé B peut être obtenu selon une procédure décrite dans l'article Shimizu, Hitoshi et al; Organic Process Research &Development, 9(3), 278-287; 2005*.*

### Synthèse de 3-((3,3-diméthyloxiran-2-yl)méthoxy)-2,4,6-triméthylbenzaldéhyde (C) :

A un mélange de 3-hydroxy-2,4,6-triméthylbenzaldéhyde (19,20 g, 0,117 mol) et de 3-(bromométhyl)-2,2-diméthyloxirane (19,30 g, 0,117 mol) dans l'acétonitrile (50 ml) est ajouté le carbonate de potassium (12,12 g, 0,877 mol). Le milieu réactionnel est agité pendant 10-11 heures à 60 ºC (T_{bain}). Après retour à température ambiante, le mélange réactionnel est dilué avec un mélange d'eau (700 ml) et d'acétate d'éthyle (100 ml) et agité pendant 10 minutes. La phase aqueuse est séparée et extraite avec de l'acétate d'éthyle (3 fois 75 ml). Les phases organiques réunies sont lavées 2 fois avec une solution de NaOH (8,0 g dans 100 ml d'eau) et de l'eau (5 fois 75 ml). Le solvant est évaporé sous pression réduite (T_{bain} 35 ºC, 10 mbar). Une huile jaune claire (28,18 g, rendement massique de 97 %) est obtenue. La pureté molaire est supérieure à 85 % (RMN ¹H). Le produit C est utilisé pour l'étape suivante sans aucune purification supplémentaire.

### Tableau d'attribution:

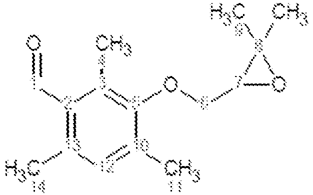

**Solvant CDCl₃**

| | δ ¹H (ppm) | δ ¹³C (ppm) |
|---|---|---|
| 1 | 10.4 | 192.6 |
| 2 | / | 131.2 |
| 3 | / | 133.3 |
| 4 | 2.43 | 12 |
| 5 | / | 153.7 |
| 6 | 3.67 et3.87 | 71.3 |
| 7 | 3.09 | 61.1 |
| 8 | / | 57.8 |
| 9 | 1.17 et 1.28 | 18.6 et 24.3 |
| 10 | / | 125.8 |
| 11 | 2.21 | 16.5 |
| 12 | 6.79 | 13.5 |
| 13 | / | 136.4 |
| 14 | 2.4 | 19.5 |

### Synthèse de 3-((3,3-diméthyloxiran-2-yl)méthoxy)-2,4,6-triméthylbenzaldéhyde oxime (D) :

A une solution de 3-((3,3-diméthyloxiran-2-yl)méthoxy)-2,4,6-triméthylbenzaldéhyde (11,8 g, 0,475 mol) dans l'alcool éthylique (25 ml) est ajoutée à 40° C (T_{bain}) une solution d'hydroxylamine (5,02 g, 0,760 mol, 50 % dans l'eau, Aldrich) dans l'alcool éthylique (10 ml). Le milieu réactionnel est agité pendant 2,5-3,0 heures à température 55°C (T_{bain}). Après évaporation du solvant (T_{bain} 32°C, 26 mbar), un mélange d'acétate d'éthyle (20 ml), d'éther de pétrole (40/60) (30 ml) et d'eau (10 ml) est ajouté.

Ensuite, la phase organique est séparée et lavée avec de l'eau (10 ml). La solution est filtrée sur une couche de silicagel (Ø 3,5 cm, h = 2,0 cm), puis la couche de silicagel est lavée par un mélange d'acétate d'éthyle (10 ml) et d'éther de pétrole (20 ml). Après évaporation des solvants (T_{bain} 33°C, 11 mbar) une huile incolore (10,33 g, rendement massique de 83%) est obtenue. La pureté molaire est supérieure à 78 % (RMN ¹H) et 16% d'EtOAc. Le produit D est utilisé dans l'étape suivante sans séchage supplémentaire.

### Tableau d'attribution:

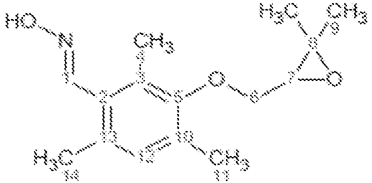

**Solvant CDCl₃**

| | δ¹H (ppm) | δ ¹³C (ppm) |
|---|---|---|
| 1 | 8.29 | 149.2 |
| 2 | / | 128.3 |
| 3 | / | 129.9 |
| 4 | 2.27 | 13.3 |
| 5 | / | 153.5 |
| 6 | 3.76 et 3.88 | 71.2 |
| 7 | 3.15 | 61.4 |
| 8 | / | 58 |
| 9 | 1.22 et 1.33 | 18.6 et 24.4 |
| 10 | / | 131.3 |
| 11 | 2.22 | 16.1 |
| 12 | 6.83 | 130.5 |
| 13 | / | 132.7 |
| 14 | 2.25 | 20.4 |

### Synthèse du 3-((3,3-diméthyloxiran-2-yl)méthoxy)-2,4,6-triméthylbenzonitrile oxyde (D-2) :

A une solution de 3-((3,3-diméthyloxiran-2-yl)méthoxy)-2,4,6-trimethylbenzaldehyde oxime (9,90 g, 0.367 mol) dans le dichlorométhane (350 ml) refroidie jusqu'à 1-3°C est ajoutée au goutte à goutte une solution aqueuse de NaOCI dans l'eau (62,9 g Cl/L) (65 ml) pendant 15 minutes. La température du milieu réactionnel reste comprise entre 2-3°C. Le milieu réactionnel est ensuite agité pendant 2 heures à 2-3°C. La phase organique est séparée et lavée avec de l'eau (3 fois 50 ml). Le solvant est évaporé à pression réduite (T_{bain} 21°C, 120 mbar). A ce résidu est additionné de l'éther de pétrole (40/60) (15 ml) et la suspension est maintenue à -18ºC pendant 2 heures. Le précipité est filtré et lavé sur le filtre par l'éther de pétrole (3 fois par 15 ml) et enfin séché pendant 10-15 heures sous pression atmosphérique à température ambiante. Un solide blanc (4,42 g, rendement massique de 45 %) avec un point de fusion de 84°C est obtenu. La pureté molaire est supérieure à 98 % (RMN ¹H).

### Tableau d'attribution:

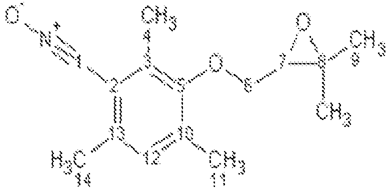

**Solvant CDCl₃**

| | δ ¹H (ppm) | δ ¹³C (ppm) |
|---|---|---|
| 1 | / | / |
| 2 | / | 112.7 |
| 3 | / | 134.2 |
| 4 | 2.35 | 14.8 |
| 5 | / | 153.4 |
| 6 | 3.93/3.71 | 71.9 |
| 7 | 3.11 | 61.2 |
| 8 | / | 57.8 |
| 9 | 1.22 et 1.33 | 24.5/18.8 |
| 10 | / | 134.2 |
| 11 | 2.23 | 16.5 |
| 12 | 6.86 | 130.2 |
| 13 | / | 137.2 |
| 14 | 2.32 | 20 |

### Synthèse de 2,4,6-triméthyl-3-(3-(3-méthyloxiran-2-yl)propoxy)benzonitrile oxyde (D-3) :

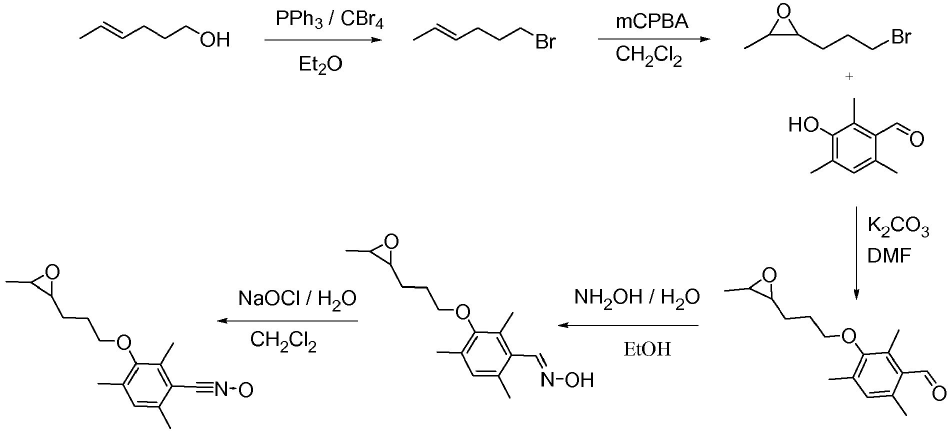

### Synthèse de 6-bromohex-2-ène :

Ce composé peut être obtenu par exemple selon une procédure décrite dans l'article Nicolai, Stefano et al. Tetrahedron, 71(35), 5959-5964; 2015*.*

### Synthèse de 2-(3-bromopropyl)-3-méthyloxirane :

Ce composé peut être obtenu par exemple selon une procédure décrite dans l'article Hu, Shanghai; Hager, Lowell P.; Tetrahedron Letters; vol. 40; nb. 9; (1999); p. 1641 - 1644*.*

### Synthèse du 2,4,6-triméthyl-3-(3-(3-méthyloxiran-2-yl)propoxy)benzaldéhyde :

A un mélange de 3-hydroxy-2,4,6-triméthylbenzaldéhyde (10,00 g, 0,061 mol) et de 2-(3-bromopropyl)-3-méthyloxirane (10,39 g, 0,058 mol) dans le DMF (5 ml) est ajouté le carbonate de potassium (6,01 g, 0,044 mol). Le milieu réactionnel est agité pendant 1 heure à 80 ºC (T_{bain}) et 3 heures à 100 ºC (T_{bain}). Après retour à température ambiante, le mélange réactionnel est dilué avec un mélange d'eau (75 ml) et de chlorure de méthylène (50 ml). Le produit est extrait avec le chlorure de méthylène (2 fois 10 ml). Les phases organiques réunies sont lavées 2 fois avec une solution de NaOH (4 g dans 50 ml d'eau) et de l'eau (3 fois par 15 ml). Le solvant est évaporé sous pression réduite (T_{bain} 45 ºC, 8 mbar). Une huile (14,25 g, rendement massique de 93 %) est obtenue. La pureté molaire est supérieure à 85 % (RMN ¹H). Le produit est utilisé pour l'étape suivante sans purification supplémentaire.

### Tableau d'attribution:

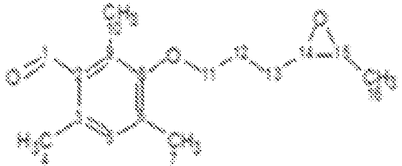

**Solvant CDCl₃**

| | δ ¹H (ppm) | δ ¹³C (ppm) |
|---|---|---|
| 1 | 10.46 | 193.2 |
| 2 | / | 131.7 |
| 3 | / | 133.8 |
| 4 | 2.45 | 19.9 |
| 5 | 6.83 | 131.9 |
| 6 | / | 137 |
| 7 | 2.22 | 16.8 |
| 8 | / | 154.4 |
| 9 | / | 136.5 |
| 10 | 2.44 | 12.3 |
| 11 | 3.67 | 72.2 |
| 12 | 1.89 | 26.7 |
| 13 | 1.62-1.79 | 28.7 |
| 14 | 2.66 | 59.3 |
| 15 | 2.75 | 54.5 |
| 16 | 1.25 | 17.6 |

### Synthèse de 2,4,6-triméthyl-3-(3-(3-méthyloxiran-2-yl)propoxy)benzaldéhyde oxime :

A une solution de 2,4,6-triméthyl-3-(3-(3-methyloxiran-2-yl)propoxy)benzaldéhyde (14,00 g, 0,056 mol) dans l'alcool éthylique (40 ml) est ajoutée à 45°C une solution d'hydroxylamine (5,13 g, 0,078 mol, 50 % dans l'eau, Aldrich) dans l'alcool éthylique (10 ml). Le milieu réactionnel est agité pendant 1,5 heure à 50°C (T_{bain}). Après l'évaporation du solvant (T_{bain} 40°C, 45 mbar), du chlorure de méthylène (50 ml) est ajouté et la solution est lavée avec de l'eau (3 fois 15 ml). Ensuite, après évaporation du solvant (T_{bain} 40°C, 70 mbar), du chlorure de méthylène est ajouté. La suspension est agitée à température ambiante pendant 10 minutes et refroidie jusqu'à -18°C pendant 10-15 minutes. Le précipité est filtré et lavé sur le filtre 3 fois avec un mélange de chlorure de méthylène (1 ml) et d'éther de pétrole (4 ml) et enfin séché sous pression atmosphérique à température ambiante. Un solide blanc (10,02 g, rendement massique de 65 %) avec un point de fusion de 78°C est obtenu. La pureté molaire est supérieure à 90 % (RMN ¹H).

### Tableau d'attribution:

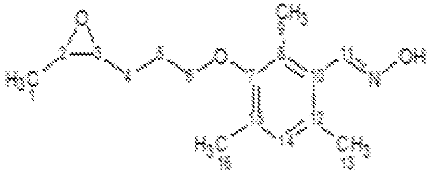

**Solvant CDCl₃**

| | δ ¹H (ppm) | δ ¹³C (ppm) |
|---|---|---|
| 1 | 1.26 | 17.6 |
| 2 | 2.76 | 54.7 |
| 3 | 2.68 | 59.5 |
| 4 | 1.65/1.79 | 28.8 |
| 5 | 1.88 | 26.8 |
| 6 | 3.68 | 72.0 |
| 7 | / | 154.1 |
| 8 | / | 130.4 |
| 9 | 2.24 | 13.6 |
| 10 | / | 128.4 |
| 11 | 8.30 | 149.9 |
| 12 | / | 132.7 |
| 13 | 2.25 | 20.5 |
| 14 | 6.82 | 130.8 |
| 15 | / | 131.8 |
| 16 | 2.19 | 16.3 |

### Synthèse de 2,4,6-triméthyl-3-(3-(3-méthyloxiran-2-yl)propoxy)benzonitrile oxyde (D-3) :

A une solution de 2,4,6-triméthyl-3-(3-(3-méthyloxiran-2-yl)propoxy)benzaldéhyde oxime (3,35 g, 0,012 mol) dans le dichlorométhane (50 ml) refroidi jusqu'à 0°C (T_{bain}) est ajoutée au goutte à goutte une solution aqueuse de NaOCI dans l'eau (4% du chlore actif, Aldrich) (17 ml) pendant 5 minutes. La température du milieu réactionnel reste comprise entre 3 et 5°C. Le milieu réactionnel est ensuite agité pendant 1 heure à température 3-5°C. La phase aqueuse est séparée puis extraite avec du dichlorométhane (5 ml). Les phases organiques réunies sont lavées avec de l'eau (2 fois 5 ml). Le solvant est évaporé à pression réduite (T_{bain} 21°C, 16 mbar). A ce résidu est ajouté de l'éther de pétrole (40/60) (7 ml) et la suspension est agitée à température ambiante pendant 10 minutes. Le précipité est filtré et lavé sur le filtre par de l'éther de pétrole (2 fois 5 ml) et enfin séché sous pression atmosphérique à température ambiante. Un solide jaune clair (2,49 g, rendement massique de 75%) avec un point de fusion de 56°C est obtenu. La pureté molaire est supérieure à 94 % (RMN ¹H).

### Tableau d'attribution:

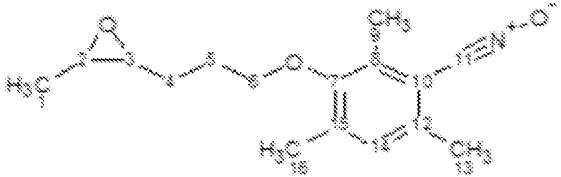

**Solvant CDCl₃**

| | δ ¹H (ppm) | δ ¹³C (ppm) |
|---|---|---|
| 1 | 1.26 | 17.6 |
| 2 | 2.75 | 54.5 |
| 3 | 2.66 | 59.3 |
| 4 | 1.60/1.80 | 28.7 |
| 5 | 1.88 | 26.8 |
| 6 | 3.68 | 72.2 |
| 7 | / | 153.9 |
| 8 | / | 137.1 ou 134.6 |
| 9 | 2.31 | 14.9 |
| 10 | / | 112.8 |
| 11 | / | / |
| 12 | / | 137.1 ou 134.6 |
| 13 | 2.31 | 20.3 |
| 14 | 6.84 | 130.3 |
| 15 | / | 134.6 |
| 16 | 2.19 | 16.5 |

### Synthèse de 2,4,6-triméthyl-3-((3-phényloxiran-2-yl)méthoxy)benzonitrile oxyde (D-4) :

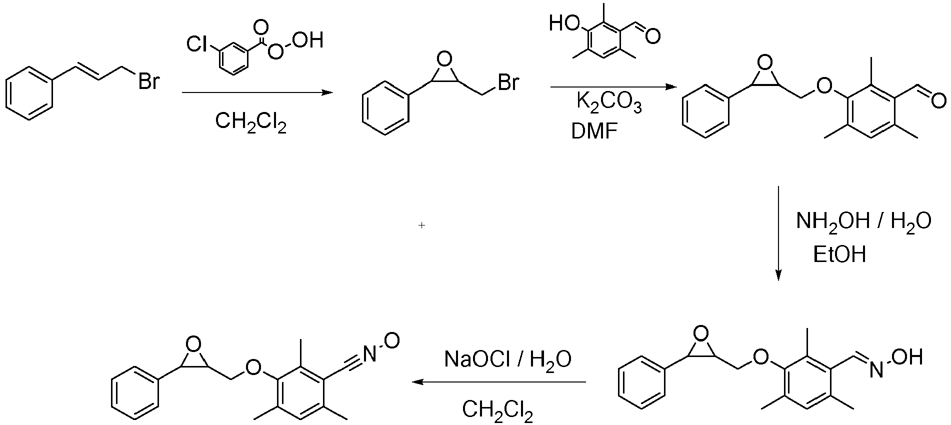

### Synthèse de 2-(bromométhyl)-3-phényloxirane :

Ce composé peut être obtenu selon une procédure décrite dans l'article Dickinson, Julia M. et al, Chemical Society, Perkin Transactions 1: Organic and Bio-Organic Chemistry (1972-1999), (4), 1179-84; 1990*.*

### Synthèse de 2,4,6-trimethyl-3-((3-phenyloxiran-2-yl)methoxy)benzaldehyde :

A un mélange de 3-hydroxy-2,4,6-triméthylbenzaldéhyde (13,50 g, 0,082 mol) et de 2-(bromométhyl)-3-phényloxirane (17,50 g, 0,082 mol) dans le DMF (8 ml) est ajouté le carbonate de potassium (8,51 g, 0,062 mol). Le milieu réactionnel est agité pendant 5-6 heures à 60 ºC (T_{bain}). Après retour à 40-50 ºC le mélange réactionnel est dilué avec un mélange d'eau (200 ml) et d'éthylacétate (70-80 ml). Le produit cible est extrait par avec de l'éthylacétate (2 fois 25 ml). Les phases organiques réunies sont lavées avec une solution de NaOH (8 g dans 70 ml d'eau) et d'eau (4 fois 25 ml). Le solvant est évaporé sous pression réduite (T_{bain} 34 ºC, 16 mbar). De l'éther de pétrole (40/60) (50 ml) est ajouté et le précipité est filtré et lavé sur le filtre avec un mélange d'éther de pétrole (15 ml) et d'éthylacétate (1 ml) et enfin séché sous pression atmosphérique à température ambiante.

Un solide beige (13,28 g, rendement massique de 55 %) avec un point de fusion de 53°C est obtenu. La pureté molaire est supérieure à 90 % (RMN ¹H).

### Tableau d'attribution:

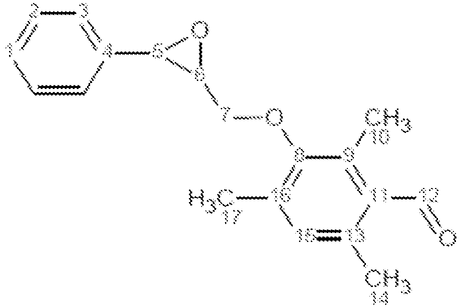

**Solvant CDCl₃**

| | δ ¹H (ppm) | δ ¹³C (ppm) |
|---|---|---|
| 1/2 | 7.18 à 7.34 | 128.2/128.3 |
| 3 | | 125.5 |
| 4 | / | 136.2 |
| 5 | 3.81 | 55.9 |
| 6 | 3.35 | 60.2 |
| 7 | 3.84 et 4.04 | 72.5 |
| 8 | / | 153.8 |
| 9/13/16 | / | 132/133.7/136.7 |
| 10 | 2.5 | 12.2 |
| 11 | / | 131.5 |
| 12 | 10.48 | 193 |
| 14 | 2.48 | 19.8 |
| 15 | 6.87 | 131.8 |
| 17 | 2.28 | 16.6 |

### Synthèse de 2,4,6-triméthyl-3-((3-phényloxiran-2-yl)méthoxy)benzaldéhyde oxime :

A une solution de 2,4,6-triméthyl-3-((3-phényloxiran-2-yl)méthoxy)benzaldéhyde (4,60 g, 0,016 mol) dans de l'alcool éthylique (20 ml) est ajoutée à 45°C une solution d'hydroxylamine (1,43 g, 0,022 mol, 50 % dans l'eau, Aldrich) dans l'alcool éthylique (5 ml). Le milieu réactionnel est agité pendant 1,5 heure à 50°C (T_{bain}). Après retour à température ambiante, de l'eau (3 ml) est ajoutée à la suspension et la suspension est maintenue à -18ºC pendant 2 heures. Le précipité est filtré et lavé sur le filtre par un mélange d'alcool éthylique et d'eau (3 ml / 2 ml et 1 ml / 4 ml) et enfin séché sous pression atmosphérique à température ambiante. Un solide blanc (3,62 g, rendement massique de 75 %) avec un point de fusion de 125°C est obtenu. La pureté molaire est supérieure à 97 % (RMN ¹H).

### Tableau d'attribution:

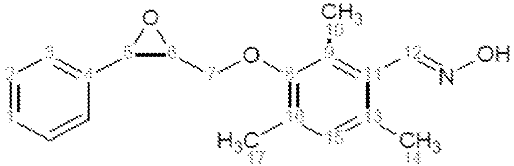

**Solvant CDCl₃**

| | δ ¹H (ppm) | δ ¹³C (ppm) |
|---|---|---|
| 1/2 | 7.21 à 7.35 | 128/128.2 |
| 3 | | 125.4 |
| 4 | / | 136.2 |
| 5 | 3.81 | 56 |
| 6 | 3.35 | 60.3 |
| 7 | 3.85 et 4.02 | 72.2 |
| 8 | / | 153.4 |
| 9 | / | 130.2 |
| 10 | 2.29 | 13.1 |
| 11 | / | 128.2 |
| 12 | 8.31 | 149.6 |
| 13 | / | 132.9 |
| 14 | 2.27 | 20.3 |
| 15 | 6.85 | 130.7 |
| 16 | / | 131 |
| 17 | 2.24 | 16 |

### Synthèse de 2,4,6-triméthyl-3-((3-phényloxiran-2-yl)méthoxy)benzonitrile oxyde (D-4) :

A une solution de 2,4,6-triméthyl-3-((3-phényloxiran-2-yl)méthoxy)benzaldéhyde oxime (10,20 g, 0,033 mol) dans le dichlorométhane (150 ml) refroidi jusqu'à 4°C est ajoutée au goutte à goutte une solution aqueuse de NaOCI dans l'eau (74,4 g Cl/L) (48 ml) pendant 15 minutes. La température du milieu réactionnel reste comprise entre 3 et 5°C. Le milieu réactionnel est ensuite agité pendant 2,5 heures à température 3-5°C. La phase aqueuse est séparée et extraite avec du dichlorométhane (15 ml). Les solutions organiques réunies sont lavées avec de l'eau (3 fois 20 ml). Le solvant est évaporé à pression réduite (T_{bain} 23°C, 22mbar). De l'éther de pétrole (40/60) (60 ml) est ajouté et la suspension est agitée à température ambiante pendant 10-15 minutes. Le précipité est filtré et lavé sur le filtre avec de l'éther de pétrole (2 fois par 20 ml) et enfin séché sous pression atmosphérique à température ambiante. Un solide blanc (8,35 g, rendement massique de 82 %) avec un point de fusion de 64°C est obtenu. La pureté molaire est supérieure à 98 % (RMN ¹H).

### Tableau d'attribution:

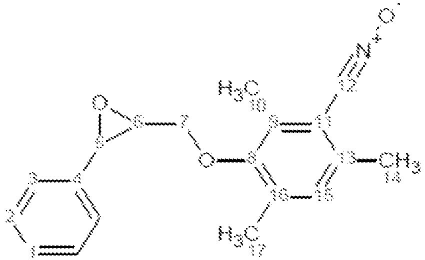

**Solvant CDCl₃**

| | δ ¹H (ppm) | δ ¹³C (ppm) |
|---|---|---|
| 1/2 | 7.21 à 7.35 | 128.2/128.4 |
| 3 | | 125.4 |
| 4 | / | 136.1 |
| 5 | 3.79 | 55.8 |
| 6 | 3.33 | 60.1 |
| 7 | 3.82 et 4.05 | 72.5 |
| 8 | / | 153.3 |
| 9/13/16 | / | 130.3/134.4/ 137.3 |
| 10 | 2.36 | 14.6 |
| 11 | / | 112.8 |
| 12 | / | / |
| 14 | 2.33 | 20.1 |
| 15 | 6.87 | 130.2 |
| 17 | 2.25 | 16.4 |

### II.4-Préparation des compositions de caoutchouc :

On prépare cinq compositions de caoutchouc, respectivement T, C-1, C-2, C-3 et C-4 dont la formulation (en pce) figure dans le tableau I.

L'élastomère de la composition T est un élastomère non modifié , en l'espèce l'élastomère de départ E1 utilisé pour préparer les élastomères modifiés des compositions 1 à 4.

La composition T est une composition témoin, puisqu'elle contient l'élastomère diénique de départ (non modifié).

L'élastomère de la composition C-n (n allant de 1 à 4) est l'élastomère E1 modifié conformément au paragraphe II-2 par le composé 1,3-dipolaires D-n.

La composition C-1 est une composition comparative, puisque l'élastomère modifié de la composition C-1 n'est pas conforme à l'invention, le groupe époxyde ne répondant pas à la formule (I).

Les compositions C-2 à C-4 sont conformes à l'invention, puisque les élastomères modifiés des compositions de caoutchouc sont conformes, le groupe époxyde ne répondant pas à la formule (I).

Les compositions de caoutchouc sont préparées selon le mode opératoire suivant :
Dans un mélangeur interne, dont la température de cuve initiale est d'environ 80°C, on introduit l'élastomère et on le malaxe pendant environ une minute. Ensuite, on introduit la charge renforçante, le silane, puis, après une à deux minutes de malaxage, les divers autres ingrédients à l'exception du système de vulcanisation. On conduit alors un travail thermomécanique (phase non-productive) en une étape (durée totale du malaxage égale à environ 5 minutes), jusqu'à atteindre une température maximale de "tombée" de 145°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 minutes. Le mélange est ensuite calandré sous forme de plaques (épaisseur de 2 à 3mm) pour la mesure des propriétés de traction et des propriétés dynamiques. Le mélange est ensuite vulcanisé, ses propriétés rhéométriques et ses propriétés à cuit sont mesurées.

Les résultats figurent dans le tableau II. Les résultats sont indiqués en base 100 par rapport à la composition témoin (T) : la valeur indiquée pour une composition est le rapport entre la valeur mesurée sur la composition et la valeur mesurée sur la composition témoin.

Les compositions C-2 à C-4 vulcanisées présentent un allongement à la rupture et une contrainte à la rupture améliorées par rapport à la composition C-1. Ces résultats sont obtenus sans être au détriment des propriétés d'hystérèse, puisque les valeurs de ΔG^{∗} et de Tan(δ) max restent très inférieures à celle de la composition témoin (T). Les valeurs de ΔC qui sont plus faibles que celle de la composition T corroborent une amélioration de l'interaction entre l'élastomère et la charge renforçante.

On observe aussi que les valeurs de Cmin des compositions C-2 à C-4 sont inférieures à celle de la composition C-1, ce qui indique une diminution de la viscosité à cru (avant vulcanisation) des compositions et augure une mise en œuvre au moins aussi aisée des compositions C-2 à C-4 que la composition T. Ce résultat est d'autant plus surprenant qu'on a constaté par ailleurs une amélioration de l'interaction entre l'élastomère et la charge renforçante.

En résumé, les polymères conformes à l'invention confèrent aux compositions de caoutchouc un compromis amélioré entre les propriétés rupture, les propriétés d'hystérèse et les propriétés de mise en œuvre comparativement aux polymères non conformes à l'invention. Ils permettent donc d'améliorer substantiellement les propriétés des compositions de caoutchouc.

**Tableau I**

| Composition | T | C-1 | C-2 | C-3 | C-4 |
|---|---|---|---|---|---|
| E1 | 100 | | | | |
| E1 modifié avec D-1 | | 100 | | | |
| E1 modifié avec D-2 | | | 100 | | |
| E1 modifié avec D-3 | | | | 100 | |
| E1 modifié avec D-4 | | | | | 100 |
| Silice (1) | 60 | 60 | 60 | 60 | 60 |
| Silane (2) | 4,8 | 4,8 | 4,8 | 4,8 | 4,8 |
| Antioxydant (3) | 3 | 3 | 3 | 3 | 3 |
| Paraffine (4) | 1 | 1 | 1 | 1 | 1 |
| ZnO (5) | 2,7 | 2,7 | 2,7 | 2,7 | 2,7 |
| Acide stéarique | 2,5 | 2,5 | 2,5 | 2,5 | 2,5 |
| CBS (6) | 1,8 | 1,8 | 1,8 | 1,8 | 1,8 |
| Soufre | 1,5 | 1,5 | 1,5 | 1,5 | 1,5 |

| | | | | | |
|---|---|---|---|---|---|
| (1) Silice « 160 MP » commercialisée par Solvay (2) TESPT commercialisé par Evonik sous la référence « SI69» (3) N-(1,3-diméthylbutyl)-N'-phényl-p-phénylènediamine de la société Flexsys (4) Agent de mise en œuvre Paraffine 6266 (5) Oxyde de zinc (6) N-cylohexyl-2-benzothiazol-sulfénamide (« Santocure » de la société Flexsys) | | | | | |

**Tableau II**

| Composition | T | C-1 | C-2 | C-3 | C-4 |
|---|---|---|---|---|---|
| Allongement rupture | 100 | 58 | 84 | 68 | 74 |
| Contrainte rupture | 100 | 90 | 111 | 97 | 97 |
| ΔG^{∗} | 100 | 71 | 79 | 88 | 88 |
| Tan(δ) max | 100 | 73 | 73 | 81 | 73 |
| C min | 100 | 110 | 74 | 74 | 84 |
| ΔC | 100 | 68 | 76 | 94 | 66 |

## Revendications

1. Polymère diénique comportant au moins un groupe pendant époxyde de formule (I) 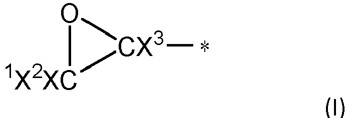 dans laquelle :
- ^{∗} représente un rattachement à la chaîne principale polymère,
- X¹ , et X² , identiques ou différents, représentent un atome d'hydrogène ou un substituant monovalent,
- X³ représente un atome d'hydrogène et
- au moins un des X¹ et X² est différent d'un atome d'hydrogène.

2. Polymère diénique selon la revendication 1, lequel polymère comporte plusieurs groupes pendants époxyde de formule (I) 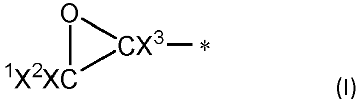 dans laquelle :
- ^{∗} représente un rattachement à la chaîne polymère,
- X¹ , et X² , identiques ou différents, représentent un atome d'hydrogène ou un substituant monovalent,
- X³ représente un atome d'hydrogène et
au moins un des X¹ et X² est différent d'un atome d'hydrogène.

3. Polymère diénique selon l'une quelconque des revendications 1 à 2 dans lequel X¹ représente un groupe substituant et X² représente un atome d'hydrogène.

4. Polymère diénique selon l'une quelconque des revendications 1 à 2 dans lequel X¹ et X² représentent chacun un groupe substituant.

5. Polymère diénique selon l'une quelconque des revendications 1 à 4 dans lequel le groupe substituant est un groupe hydrocarboné.

6. Polymère diénique selon l'une quelconque des revendications 1 à 5 dans lequel le groupe substituant est un alkyle ou un aryle.

7. Polymère diénique selon l'une quelconque des revendications 1 à 6 dans lequel le groupe substituant est un alkyle ayant 1 à 6 atomes de carbone, de préférence méthyle, ou est un aryle ayant 6 à 12 atomes de carbone, de préférence phényle.

8. Polymère diénique selon l'une quelconque des revendications 1 à 7 dans lequel le groupe époxyde est en dehors des extrémités de la chaîne principale polymère.

9. Polymère diénique selon l'une quelconque des revendications 1 à 8, lequel polymère est choisi dans le groupe constitué par les polybutadiènes, les polyisoprènes, les copolymères de 1,3-butadiène, les copolymères d'isoprène et leur mélange.

10. Polymère diénique selon l'une quelconque des revendications 1 à 9, lequel polymère est un élastomère.

11. Composition de caoutchouc qui comprend une charge renforçante, un système de réticulation et un polymère diénique défini à l'une quelconque des revendications 1 à 10.

12. Composition de caoutchouc selon la revendication 11 dans laquelle la charge renforçante comprend une charge inorganique renforçante, de préférence une silice.

13. Pneumatique qui comprend une composition définie à la revendication 11 ou 12.

## Patentansprüche

1. Dienpolymer mit mindestens einer Epoxid-Seitengruppe der Formel (I) 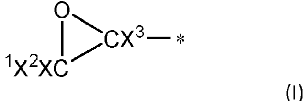 wobei:
- * für eine Verknüpfung mit der Polymerhauptkette steht,
- X¹ und X² gleich oder verschieden sind und für ein Wasserstoffatom oder einen einwertigen Substituenten stehen,
- X³ für ein Wasserstoffatom steht und
- mindestens eine der Gruppen X¹ und X² von einem Wasserstoffatom verschieden ist.

2. Dienpolymer nach Anspruch 1, wobei das Polymer mehrere Epoxid-Seitengruppen der Formel (I) 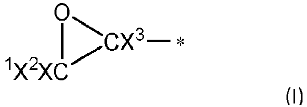 umfasst, wobei:
- * für eine Verknüpfung mit der Polymerhauptkette steht,
- X¹ und X² gleich oder verschieden sind und für ein Wasserstoffatom oder einen einwertigen Substituenten stehen,
- X³ für ein Wasserstoffatom steht und
- mindestens eine der Gruppen X¹ und X² von einem Wasserstoffatom verschieden ist.

3. Dienpolymer nach einem der Ansprüche 1 bis 2, wobei X¹ für eine Substituentengruppe steht und X² für ein Wasserstoffatom steht.

4. Dienpolymer nach einem der Ansprüche 1 bis 2, wobei X¹ und X² jeweils für eine Substituentengruppe stehen.

5. Dienpolymer nach einem der Ansprüche 1 bis 4, wobei es sich bei der Substituentengruppe um eine Kohlenwasserstoffgruppe handelt.

6. Dienpolymer nach einem der Ansprüche 1 bis 5, wobei es sich bei der Substituentengruppe um ein Alkyl oder ein Aryl handelt.

7. Dienpolymer nach einem der Ansprüche 1 bis 6, wobei es sich bei der Substituentengruppe um ein Alkyl mit 1 bis 6 Kohlenstoffatomen, vorzugsweise Methyl, oder ein Aryl mit 6 bis 12 Kohlenstoffatomen, vorzugsweise Phenyl, handelt.

8. Dienpolymer nach einem der Ansprüche 1 bis 7, wobei sich die Epoxidgruppe außerhalb der Enden der Polymerhauptkette befindet.

9. Dienpolymer nach einem der Ansprüche 1 bis 8, wobei das Polymer aus der Gruppe bestehend aus Polybutadienen, Polyisoprenen, 1,3-Butadien-Copolymeren, Isopren-Copolymeren und einer Mischung davon ausgewählt ist.

10. Dienpolymer nach einem der Ansprüche 1 bis 9, wobei es sich bei dem Polymer um ein Elastomer handelt.

11. Kautschukzusammensetzung, die einen verstärkenden Füllstoff, ein Vernetzungssystem und ein Dienpolymer gemäß einem der Ansprüche 1 bis 10 umfasst.

12. Kautschukzusammensetzung nach Anspruch 11, wobei der verstärkende Füllstoff einen verstärkendem anorganischen Füllstoff, vorzugsweise eine Kieselsäure, umfasst.

13. Reifen, der eine Zusammensetzung gemäß Anspruch 11 oder 12 umfasst.

## Claims

1. Diene polymer including at least one epoxide side group of formula (I) 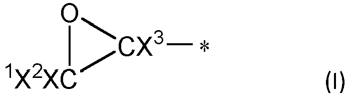 in which:
- ^{∗} represents an attachment to the main polymer chain,
- X¹ and X², which may be identical or different, represent a hydrogen atom or a monovalent substituent,
- X³ represents a hydrogen atom, and
- at least one from among X¹ and X² is other than a hydrogen atom.

2. Diene polymer according to Claim 1, in which the polymer includes several epoxide side groups of formula (I) 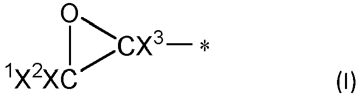 in which:
- ^{∗} represents an attachment to the main polymer chain,
- X¹ and X², which may be identical or different, represent a hydrogen atom or a monovalent substituent,
- X³ represents a hydrogen atom, and
at least one from among X¹ and X² is other than a hydrogen atom.

3. Diene polymer according to either of Claims 1 and 2, in which X¹ represents a substituent group and X² represents a hydrogen atom.

4. Diene polymer according to either of Claims 1 and 2, in which X¹ and X² each represent a substituent group.

5. Diene polymer according to any one of Claims 1 to 4, in which the substituent group is a hydrocarbon-based group.

6. Diene polymer according to any one of Claims 1 to 5, in which the substituent group is an alkyl or an aryl.

7. Diene polymer according to any one of Claims 1 to 6, in which the substituent group is an alkyl containing 1 to 6 carbon atoms, preferably methyl, or is an aryl containing 6 to 12 carbon atoms, preferably phenyl.

8. Diene polymer according to anyone of Claims 1 to 7, in which the epoxide group is outside of the ends of the main polymer chain.

9. Diene polymer according to any one of Claims 1 to 8, which polymer is chosen from the group consisting of polybutadienes, polyisoprenes, 1,3-butadiene copolymers, isoprene copolymers and a mixture thereof.

10. Diene polymer according to any one of Claims 1 to 9, in which the polymer is an elastomer.

11. Rubber composition based which comprises a reinforcing filler, a crosslinking system and a diene polymer defined in any one of Claims 1 to 10.

12. Rubber composition according to Claim 11, in which the reinforcing filler comprises a reinforcing inorganic filler, preferably a silica.

13. Tyre which comprises a composition defined in Claim 11 or 12.
